# FASCICULE DE BREVET EUROPEEN

(11) **EP 3 419 886 B1**
(45) Date de publication et mention de la délivrance du brevet: **29.01.2020**
(21) Numéro de dépôt: 17711711.6
(22) Date de dépôt: 27.02.2017
(51) Int. Cl.: B62K 27/00, B62M 6/40, B62M 6/45, B62K 27/10, B62D 59/00

(54) **REMORQUE MOTORISEE COMPORTANT UN DISPOSITIF D'ASSERVISSEMENT DES MOTEURS**
ANGETRIEBENER ANHÄNGER MIT EINER MOTORSTEUERUNGSVORRICHTUNG
POWER-OPERATED TRAILER COMPRISING A MOTOR CONTROL DEVICE

(30) Priorité: 25.02.2016 FR 1651572
(43) Date de publication de la demande: 02.01.2019
(73) Titulaire: Vallier, Gilles, 75011 Paris (FR); Duvaut, Nicolas, 13002 Marseille (FR); Duvaut, Damien, 75013 Paris (FR)
(72) Inventeur: Vallier, Gilles, 75011 Paris (FR); Duvaut, Nicolas, 13002 Marseille (FR); Duvaut, Damien, 75013 Paris (FR)
(74) Mandataire: IP Trust
(86) Numéro de dépôt international: PCT/FR2017/050422
(87) Numéro de publication internationale: WO 2017/144832

(56) Documents cités:
- FR-A1- 2 966 797
- US-A1- 2008 023 234
- US-A1- 2012 037 435

## Description

### DOMAINE TECHNIQUE DE L'INVENTION

L'invention concerne le domaine des véhicules tractés.

L'invention concerne plus particulièrement une remorque motorisée destinée à être attelée à un cycle, comprenant un dispositif permettant d'adapter la direction, la vitesse d'avance et/ou la vitesse de freinage de la remorque lorsque celle-ci est attelée audit cycle.

On désigne par cycle dans la présente demande tout appareil de locomotion muni de roues et mû par l'action des pieds sur des pédales (vélo, tricycle, tandem, etc.), y compris les cycles à pédalage assisté tels qu'un vélo électrique.

### ETAT DE LA TECHNIQUE

On connaît de l'état de la technique des remorques motorisées arrangées pour adapter leur vitesse d'avance et/ou leur vitesse de freinage en fonction de celles du véhicule sur lequel elles sont attelées.

US 2008/023234 A1 décrit une remorque motorisée pour cycles selon le préambule de la revendication 1.

Parmi de telles remorques, on connaît celles décrites dans les demandes FR2611611 ou WO2010/146497.

On connait également de la demande WO2012/095615 un engin roulant, du type remorque, apte à être tracté par des moyens tracteurs, comprenant des moyens de mesure d'effort placés sur l'arbre d'attelage de l'engin roulant aux moyens tracteurs, lesdits moyens de mesure étant configurés pour mesurer, à l'état attelé de l'engin roulant, au moins un signal représentatif de l'effort longitudinal exercé par les moyens tracteurs sur l'engin roulant, ou inversement, suivant une direction parallèle à l'axe longitudinal de l'engin roulant et au moins un signal représentatif de l'effort transversal exercé par les moyens tracteurs sur l'engin roulant, ou inversement, suivant une direction transversale par rapport à l'axe longitudinal de l'engin roulant. L'engin roulant comporte également des moyens de motorisation aptes à appliquer un couple de rotation à au moins l'une des roues, des moyens de freinage ainsi que des moyens de pilotage aptes à communiquer avec lesdits moyens de mesure d'effort. Les moyens de pilotage comprennent quant à eux des moyens de commande configurés pour commander alternativement les moyens de motorisation ou les moyens de freinage en fonction de l'effort longitudinal mesuré par lesdits moyens de mesure d'effort, de manière à appliquer à au moins l'une des roues de l'engin roulant une accélération, ou respectivement un freinage, de sorte à réduire les efforts exercés sur l'arbre d'attelage et ainsi « effacer » le poids de l'engin roulant.

L'engin roulant décrit dans la demande susmentionnée présente cependant l'inconvénient de ne pas établir de mesures suffisamment fines des efforts longitudinaux et transversaux exercés au niveau des moyens d'attelage pour assurer un pilotage précis de la vitesse, du freinage et de la direction de l'engin roulant. Par ailleurs, l'action de l'engin roulant sur les moyens tracteurs reste limitée, celui-ci se limitant à s'effacer par rapport aux moyens tracteurs. Enfin, la commande de l'engin roulant offre peu de flexibilité, le cycliste ne pouvant pas intervenir sur le comportement de l'engin roulant au cours de son déplacement.

L'invention vise à remédier à ces problèmes en proposant une remorque motorisée dont la vitesse, le freinage et la direction peuvent être pilotés de manière précise.

L'invention a également pour but de proposer une remorque pouvant être commandée de manière dynamique et en temps réel par la personne roulant sur le cycle sur lequel elle est attelée.

### OBJET DE L'INVENTION

A cet effet, et selon un premier aspect, l'invention propose une remorque destinée à être attelée à un cycle, ladite remorque comprenant un châssis définissant un axe longitudinal AA, ledit châssis comportant des roues, chaque roue étant couplée à un moteur électrique, un dispositif d'attelage du châssis au cycle et un dispositif de pilotage de la direction et de la vitesse ou du freinage de la remorque selon des instructions de commande données, le dispositif de pilotage comprenant des moyens de mesure de signaux représentatifs d'efforts configurés pour mesurer au moins un signal représentatif de l'effort longitudinal et au moins un signal représentatif de l'effort transversal qui sont exercés par le cycle sur la remorque lorsque la remorque est attelée audit cycle ainsi qu'une unité de commande des moteurs apte à recevoir les informations relatives auxdits efforts longitudinaux et transversaux. La remorque est remarquable en ce que les moyens de mesure comportent des capteurs parmi lesquels d'une part l'un des capteurs au moins est un capteur de déformation constituant les moyens de mesure du signal représentatif de l'effort longitudinal exercé par le cycle sur la remorque lorsque celle-ci est attelée audit cycle, et parmi lesquels d'autre part deux capteurs sont situés au niveau des roues constituant les moyens de mesure des signaux représentatifs de l'effort transversal exercé par le cycle sur la remorque lorsque celle-ci est attelée audit cycle.

Un tel arrangement de capteurs permet de fournir une information relative aux efforts transversaux affinée et ainsi d'assurer un pilotage différentié des roues de la remorque plus précis et de fait plus sécurisé que celui obtenu avec les ensembles remorques et cycles de l'art antérieur.

Le terme « au niveau » dans l'expression « situés au niveau des roues » s'entend dans la présente demande comme étant «intégrés aux roues» ou «situés à proximité des roues ».

Avantageusement, les moyens de mesure comportent au moins deux capteurs de déformation fixés sur le châssis, symétriquement par rapport à l'axe longitudinal dudit châssis, chaque capteur de déformation, étant situé à proximité d'une des roues et en amont d'une des roues associée.

On désigne par « en amont d'une roue », la partie du châssis correspondant à l'avant de la remorque, l'axe passant par le moyeu des roues de la remorque délimitant la partie avant de la partie arrière de la remorque. En d'autres termes, les capteurs de déformation sont portés par la partie du châssis comprise entre les roues et le dispositif d'attelage.

La déportation des capteurs de déformation sur le châssis, ces derniers étant prévus dans l'art antérieur sur le dispositif d'attelage, permet d'offrir des mesures précises des efforts longitudinaux exercés de chaque côté de la remorque et ainsi de parvenir à une meilleure interprétation des efforts transversaux exercés au niveau de l'axe d'attelage.

Avantageusement, le châssis est formé de deux longerons sur chacun desquels une roue est fixée, chaque longeron comportant un capteur de déformation disposé à une distance de la roue associée inférieure à la moitié de la distance séparant le moyeu de la roue de l'extrémité du longeron la plus proche du dispositif d'attelage.

Selon une variante de réalisation, les moyens de mesure comportent un capteur de déformation intégré au dispositif d'attelage et deux capteurs de position associés chacun au moteur d'une des roues. Le capteur de déformation permet ainsi de mesurer l'effort longitudinal tandis que les capteurs de position permettent de caractériser la vitesse de chacune des roues, la mesure combinée des deux vitesses étant représentative de l'effort transversal. L'avantage de cette variante de réalisation est de simplifier la fabrication d'une remorque pourvue d'un dispositif de pilotage selon l'invention, ainsi que de rendre plus aisée sa maintenance et ce, tout en conservant une précision de l'information relative aux efforts transversaux similaire à celle obtenue avec la variante précédemment décrite dans laquelle les capteurs mis en œuvre sont des capteurs de déformations déportés au voisinage des roues de la remorque.

Avantageusement, il peut être prévu que le dispositif d'attelage comprenne deux barres d'attelage destinées à être fixées respectivement au vélo et à la remorque et reliées entre elles par une pièce de raccordement constituant le capteur de déformation. Afin d'éviter des variations de température brutales et non homogènes du capteur de déformation, il peut être prévu avantageusement de disposer entre la pièce de raccordement et les barres d'attelage, au niveau de la liaison, un isolant thermique.

Avantageusement, l'unité de commande comporte un algorithme d'asservissement du mouvement de la remorque au mouvement du cycle lorsque ladite remorque est attelée audit cycle, l'algorithme étant configuré pour piloter les moteurs en fonction d'un mode de fonctionnement de la remorque sélectionné parmi des modes de fonctionnement implémentés dans ladite unité de commande et des signaux mesurés représentatifs des efforts longitudinaux et transversaux, lesdits modes de fonctionnement implémentés comprenant un mode dit d'« effacement » de la remorque dans lequel les moteurs sont pilotés suivant une valeur du signal mesuré de l'effort longitudinal asservie à une valeur correspondant à un effort longitudinal nul, un mode dit de « poussée » de la remorque dans lequel les moteurs sont pilotés suivant une valeur du signal mesuré représentatif de l'effort longitudinal mesuré asservie à une valeur correspondant à un effort longitudinal négatif et un mode dit « résistant » de la remorque dans lequel les moteurs sont pilotés suivant une valeur du signal mesuré représentatif de l'effort longitudinal mesuré asservie à une valeur correspondant à un effort longitudinal positif.

Avantageusement, les modes de fonctionnement implémentés dans l'unité de commande sont sélectionnés et actionnés par un dispositif de commande à distance, de préférence fixé sur le guidon du cycle.

Avantageusement, le dispositif de pilotage comporte en outre une gâchette de frein électrique apte à être fixée sur la gâchette d'un des freins mécaniques du cycle.

Avantageusement, la remorque comporte au moins une batterie rechargeable durant le fonctionnement en mode résistant de la remorque et/ou lors de l'actionnement de la gâchette de frein électrique.

Avantageusement, le capteur de déformation comporte au moins deux jauges de déformation disposées à 90 degrés l'une de l'autre, l'une des jauges étant orientée suivant l'axe longitudinal AA du châssis.

Avantageusement, l'unité de commande comporte un module de comparaison de la vitesse de la remorque à une vitesse seuil intermédiaire et une vitesse seuil maximale enregistrées dans un module mémoire de l'unité de commande.

Avantageusement, la remorque comporte au moins un module photovoltaïque.

L'invention concerne également un cycle attelé d'une remorque telle que décrite ci-dessus, dont le dispositif de commande à distance, arrangé pour communiquer avec l'unité de commande de la remorque et en particulier permettre la sélection d'un mode de fonctionnement parmi les modes de fonctionnement implémentés dans l'unité de commande, est fixé sur le guidon dudit cycle.

Avantageusement, le cycle comporte une gâchette de frein électrique fixée sur la gâchette d'un des freins mécaniques dudit cycle. On entend par « freins mécaniques » les freins classiques (i.e. existants) du cycle.

La remorque selon l'invention a pour avantage de pouvoir être asservie, non seulement de manière à effacer son poids pour suivre le cycle, mais également pour pousser le cycle et donc soulager le cycliste ou pour freiner le cycle.

Un autre avantage de la remorque selon l'invention est de permettre un paramétrage en temps réel par le cycliste du mode de fonctionnement de la remorque souhaité (effacement, poussée ou freinage).

Un autre avantage de la remorque selon l'invention est de permettre, dans le mode résistif, la récupération de l'énergie de freinage conjointement du cycle et de la remorque.

### BREVE DESCRIPTION DES FIGURES

D'autres objets et avantages de l'invention apparaîtront au cours de la description qui suit, faite en référence aux dessins annexés, dans lesquels :
- la figure 1 représente une vue schématique de côté d'un ensemble attelé vélo-remorque selon un premier exemple de réalisation de l'invention ;
- la figure 2 représente une vue en coupe selon l'axe II-II de l'ensemble remorque-vélo illustré sur la figure 1 ;
- la figure 3 représente une vue de détail de la remorque illustrée sur la figure 2 ;
- la figure 4 représente une vue en coupe selon l'axe IV-IV de la remorque illustrée sur la figure 3 ;
- la figure 5 représente un schéma de montage du capteur d'effort illustré sur la figure 3 ;
- la figure 6 représente un schéma-bloc du dispositif de pilotage de la vitesse ou du freinage de la remorque mis en œuvre dans l'ensemble illustré sur la figure 1 ;
- la figure 7 représente une vue schématique de côté d'un ensemble attelé vélo-remorque selon un autre exemple de réalisation de l'invention ;
- la figure 8 représente une vue de détail de la pièce portant le capteur de déformation intégré dans le dispositif d'attelage de l'ensemble de la figure 7;
- les figures 9 et 10 représentent une vue de détail de la partie du dispositif d'attelage dans laquelle le capteur de déformation est intégré.

### DESCRIPTION DETAILLEE DES FIGURES

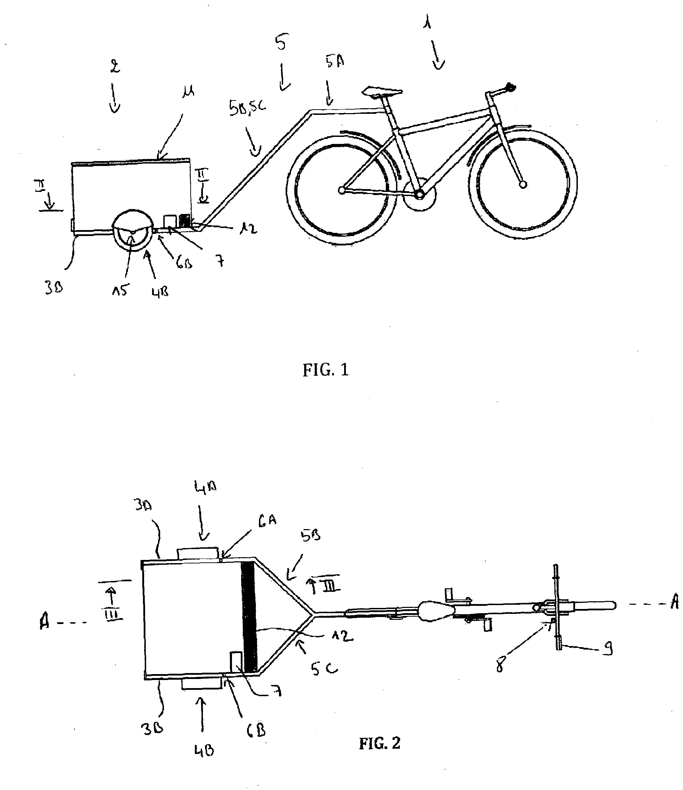

En relation avec les figures 1 à 6, il est décrit un exemple de réalisation d'un ensemble comprenant un vélo 1 attelé d'une remorque 2.

La remorque 2 comprend un châssis 3, d'axe longitudinal AA, comprenant deux longerons horizontaux 3A, 3B, parallèles entre eux, sur chacun desquels une roue 4A, 4B est fixée. Les roues 4A, 4B sont fixées soit directement soit par l'intermédiaire d'un support d'essieux. Les figures illustrent une remorque comportant uniquement deux roues 4A, 4B. Il est bien entendu évident que l'invention ne se limite pas à cette configuration et qu'il peut être prévu une remorque équipée de plusieurs paires de roues sans sortir du cadre de l'invention.

Selon un mode de réalisation préféré, chaque roue 4A, 4B est couplée à un moteur 15 lequel est choisi réversible afin de permettre, lorsque la remorque est attelée au vélo 1, un fonctionnement d'une part en tant que moteur pour faire avancer la remorque ou l'ensemble remorque/vélo et d'autre part en tant que générateur pour freiner la remorque ou l'ensemble remorque/vélo. L'avantage de prévoir un moteur par roue est de permettre un contrôle différentié desdites roues 4A, 4B. Par ailleurs, afin de limiter l'encombrement et simplifier la transmission entre les moteurs et les roues, chaque moteur est avantageusement intégré à une roue (figure 1). Avantageusement, les moteurs sont des moteurs à courant continu à aimants permanents sans réduction.

La remorque 2 est fixée au vélo 1 par l'intermédiaire d'un dispositif d'attelage 5. Dans le mode de réalisation illustré, le dispositif d'attelage 5 comporte un premier bras de raccordement 5A pourvu à l'une de ses extrémités d'une tête d'attelage au vélo 1, et un deuxième et troisième bras 5B, 5C, symétriques entre eux par rapport au premier bras 5A et solidaires du premier bras de raccordement 5A. Chaque longeron 3A, 3B est solidaire par l'une de ses extrémités (extrémité la plus proche du vélo 1) aux deuxième et troisième bras 5B, 5C. Le dispositif d'attelage 5 présente ainsi une structure de forme sensiblement tétraédrique.

Avantageusement, la tête d'attelage du dispositif d'attelage est arrangée pour permettre une connexion et déconnexion facile et rapide de la remorque 2 au vélo 1. Selon un mode de réalisation particulier, il peut être prévu un dispositif amortisseur intégré à la tête d'attelage pour dé-rigidifier la liaison remorque/vélo et ainsi éviter la transmission des sauts ou à-coups subis par le vélo à la remorque et inversement. Il peut être prévu également, en remplacement ou en complément du dispositif amortisseur, un système de liaison remorque/vélo du type double pivot, rotule ou similaires. Comme illustré sur la figure 1, le dispositif d'attelage est arrangé pour venir se fixer sur l'axe de la selle. La tête d'attache est prévue pour s'adapter à n'importe quel type de vélo et garantir une attache simple et sécurisée de la remorque 2 au vélo 1. Selon une variante de réalisation particulière, la tête d'attache du dispositif d'attelage 5 est formée en deux parties, l'une des parties étant destinée à être fixée sur le vélo 1, l'autre partie étant ménagée au niveau de l'extrémité du dispositif d'attelage, lesdites parties étant arrangées pour venir en prise l'une avec l'autre, comme par exemple par clipsage.

Avantageusement, chaque longeron 3A, 3B comporte un capteur de déformation 6A, 6B destiné à mesurer en temps réel les signaux représentatifs des efforts longitudinaux de traction et/ou compression exercés sur chaque côté de la remorque 2. La combinaison des mesures de ces deux capteurs donnera l'information relative aux efforts longitudinaux et transversaux exercés par le vélo sur la remorque. Selon l'invention, chaque capteur de déformation 6A, 6B est situé à proximité d'une roue 4A, 4B, en amont de ladite roue 4A, 4B. On désigne par « en amont de la roue », la partie du châssis 3 s'étendant vers l'avant de l'ensemble vélo/remorque, c'est-à-dire, la partie du châssis 3 la plus proche du vélo 1. Comme illustré sur les figures 1 à 4, les capteurs de déformation 6A, 6B sont disposés à une distance de la roue 4A, 4B associée inférieure à la moitié de la distance séparant le moyeu de la roue 4A, 4B de l'extrémité du longeron 3A, 3B la plus proche du vélo 1. Les capteurs de déformation 6A, 6B sont connectés à une unité de commande 7 décrite plus loin via un câblage adapté.

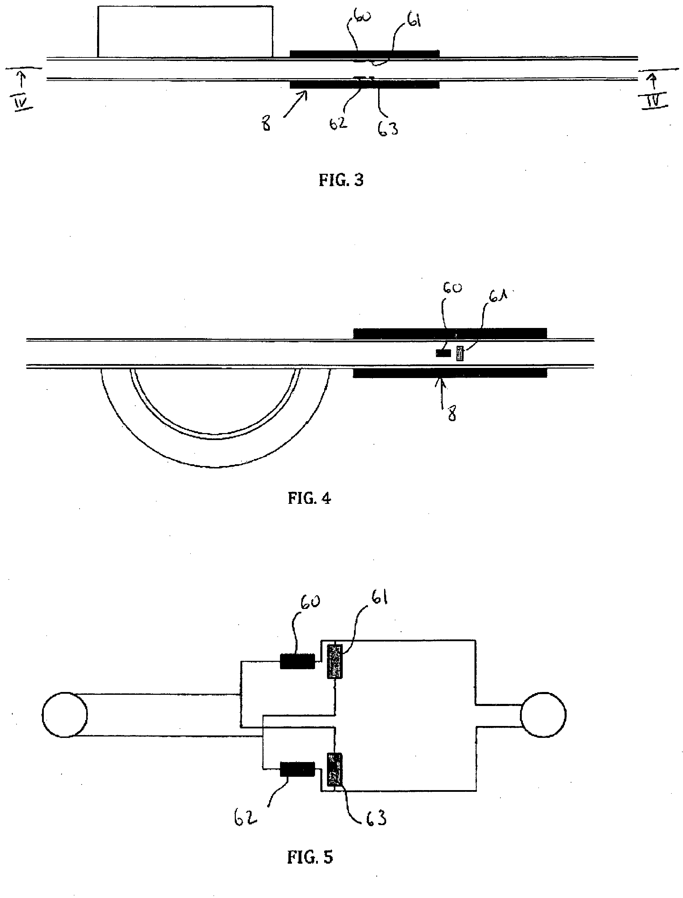

Avantageusement, les capteurs de déformation 6A, 6B sont des capteurs à jauges de déformation. Dans le mode de réalisation illustré, ils comprennent quatre jauges de déformation montées en pont de Wheatstone (figure 5). Plus particulièrement, chaque capteur de déformation 6A, 6B comprend quatre jauges de déformation 60, 61, 62, 63, deux des jauges 60, 62 opposées étant orientées suivant l'axe longitudinal AA du châssis 3, avantageusement symétriquement l'une de l'autre par rapport à l'axe du longeron auquel elles sont associées (axe parallèle à l'axe du châssis), les deux autres (jauges 61, 63) étant orientées orthogonalement à l'axe du longeron associé sur lequel elles sont fixées, avantageusement symétriquement l'une de l'autre par rapport à l'axe du longeron. Il s'agit bien entendu d'un exemple de réalisation, les capteurs de déformation n'étant pas limités à cette configuration. En particulier, il peut être prévu des capteurs présentant un montage de deux jauges de déformation et de deux résistances.

Afin de protéger les jauges de déformation 60 à 63 mais également la structure environnante desdites jauges d'éventuels chocs, chaque longeron 3A, 3B est avantageusement entouré d'une gaine de protection 8 (figures 3 et 4). Dans le mode de réalisation illustré, chaque gaine de protection 8 est prévue pour entourer partiellement le longeron associé 3A, 3B, au niveau de la portion portant lesdites jauges.

Selon un mode de réalisation avantageux, il peut être prévu également d'autres jauges de déformation disposées de manière à permettre une mesure des contraintes dans le plan vertical. De telles mesures permettront, lorsque relevées et prises en compte par l'unité de commande 7, d'adapter le contrôle des moteurs pour une fluidité de conduite optimale, et ainsi faciliter le franchissement de « petits obstacles » tels que des nids de poules, des trottoirs, etc.

L'unité de commande 7 commande le fonctionnement de chacun des moteurs 5 en vitesse en vue de piloter la direction et l'accélération ou le freinage de la remorque, et/ou l'accélération ou le freinage de l'ensemble vélo/remorque, suivant les efforts mesurés par les capteurs de déformation 6A, 6B et suivant un mode de fonctionnement sélectionné par l'utilisateur du vélo 1 parmi les modes de fonctionnement implémentés dans l'unité de commande 7. Plus spécifiquement, trois modes de fonctionnement ont été implémentés dans l'unité de commande : un mode dit d'« effacement », un mode dit de « poussée » et un mode dit « résistant ». Plus particulièrement, le mode « effacement » correspond au mode dans lequel la remorque 2 efface son propre poids par action de ses moteurs pour suivre le vélo 1 quelle que soit son allure, le mode « poussée » correspond au mode dans lequel la remorque 2 pousse le vélo et donc soulage l'effort du cycliste par action de ses moteurs, le mode « résistant » correspond au mode dans lequel le couple moteur est résistant, la remorque 2 freinant alors le vélo 1 et permettant conjointement le rechargement d'une ou plusieurs batterie(s) 12 prévue(s) sur la remorque 2.

En fonction des modes sélectionnés, l'unité de commande 7 asservit la valeur d'effort longitudinal mesurée par chacun des capteurs de déformation 6A, 6B à une valeur nulle en mode « effacement » (consommation d'énergie), une valeur négative (compression) en mode « poussée » (consommation accrue d'énergie), et une valeur positive (traction) en mode « résistant » (recharge), et dans tous les modes asservit indirectement la valeur de l'effort transversal au niveau de l'axe d'attelage à une valeur nulle, ce qui permet à la remorque de suivre la même trajectoire que le cycle sans effort transversal sur le cycle.

Afin que la personne utilisant le vélo 1 puisse sélectionner le mode de fonctionnement (effacement, poussée, résistance) parmi les modes de fonctionnement implémentés sur l'unité de commande 7, le vélo 1 comporte un dispositif de commande (ou interface de commande), du type écran tactile 8, déporté de la remorque 2, pour être avantageusement aménagé de manière accessible à l'utilisateur, notamment lorsque ce dernier est en train de se déplacer en vélo 1. Dans le mode de réalisation illustré, l'écran tactile 8 est fixé sur le guidon du vélo 1. Avantageusement, les valeurs des vitesses seuils intermédiaire et maximale mémorisées dans l'unité de commande 7 peuvent être modifiées à partir de l'écran tactile 8. L'écran tactile 8 et l'unité de commande 7 sont agencés pour échanger des données de manière non filaire. Selon un mode de réalisation particulier, il peut être prévu qu'un Smartphone (téléphone intelligent) ou similaire constitue l'interface de commande. Dans ce cas, la connexion du Smartphone avec l'unité de commande 7 est réalisée via une application dédiée. Le Smartphone est fixé sur une base contenant éventuellement une batterie auxiliaire aux fins de son rechargement. Selon une configuration particulière, l'interface de commande permet d'activer ou de désactiver les feux de signalisation placés à l'arrière de la remorque 2 auxquels l'interface est connectée.

L'unité de commande 7 comporte en outre un module de comparaison de la vitesse de l'ensemble remorque/vélo mesurée par les capteurs 16 des moteurs 15 (capteurs du type à effet hall) à une vitesse seuil intermédiaire et une vitesse seuil maximale enregistrées dans un module mémoire de l'unité de commande 7. La vitesse seuil intermédiaire correspond par exemple à la vitesse limite réglementaire d'assistance des VAE (Vélos à Assistance Electrique), tandis que la vitesse seuil maximale correspond à la vitesse établie comme ne devant ne pas être dépassée par un vélo 1 attelé d'une remorque 2. Cette dernière vitesse est qualifiée de vitesse de sécurité. Ainsi, en France, la vitesse limite réglementaire d'assistance des VAE est 25 km/h. La vitesse seuil maximale pourra être fixée par exemple à 35 km/h. Lorsque l'ensemble remorque/vélo se déplace à une vitesse supérieure à la vitesse seuil intermédiaire, l'unité de commande 7 annule le mode « poussée », actionnant en remplacement et automatiquement le mode « effacement», celui-ci s'arrêtant automatiquement au-delà de la vitesse seuil maximale, la remorque 2 passant alors en mode « résistant ».

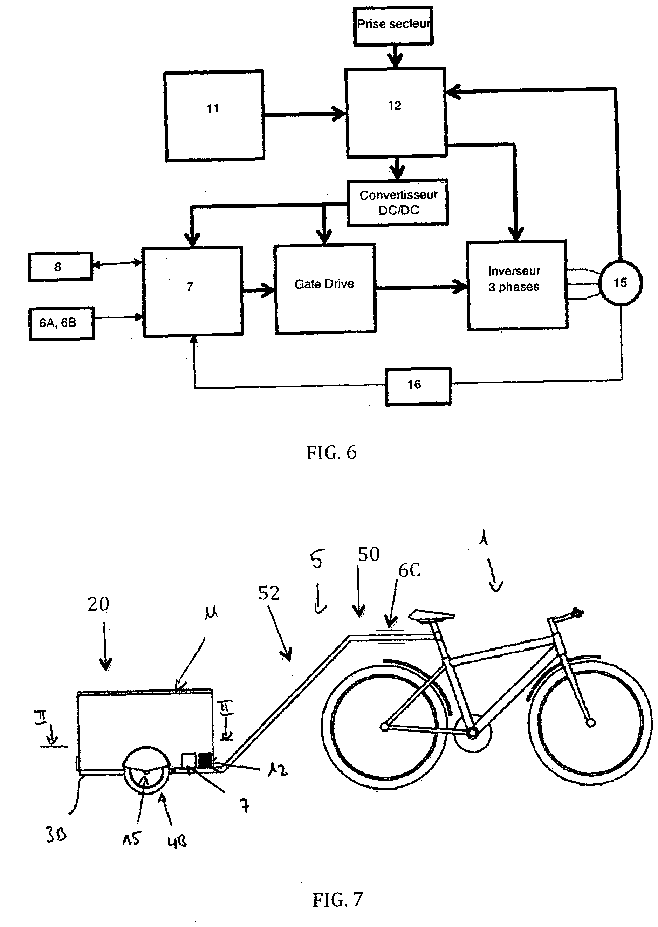

Comme on le comprend, l'unité de commande 7 constitue donc l'intelligence de la remorque 2, fonctionnant grâce à un algorithme d'asservissement implanté dans l'unité de commande 7. Elle prend en compte les données envoyées par les capteurs de déformation 6A, 6B, le mode de fonctionnement (effacement, poussée ou résistant) sélectionné par l'utilisateur sur l'interface de commande ainsi que la vitesse de chacun des moteurs 15 mesurée par le capteur 16 dédié associé à chaque moteur 15. L'unité de commande 7 calcule à partir de ces données la valeur d'effort que chaque capteur de déformation 6A, 6B devrait mesurer et pilote en conséquence les moteurs en temps réel par une commande en tension pour asservir les capteurs à la valeur d'effort programmée. La commande en tension se fait via une carte électronique. La figure 6 illustre le schéma-bloc de l'ensemble des composants intervenant dans le pilotage de la remorque, en liaison avec l'unité de commande.

En fonction de l'autonomie souhaitée et de la masse de chargement maximale souhaitée, la remorque 2 peut comporter une ou plusieurs batterie(s) 12. Une prise de recharge de la batterie 12 est de préférence intégrée à la remorque 2 pour une recharge type borne électrique urbaine. Il peut être prévu également que la batterie 12 soit fixée de manière amovible sur la remorque 2 de façon à permettre une recharge sur secteur dans une habitation. La batterie 12 est avantageusement choisie pour offrir une capacité en énergie suffisante pour permettre des recharges d'appareils électroniques (téléphones, ordinateurs) mais également pour éventuellement assurer le rechargement d'appareils à consommation énergétique plus importante embarqués sur la remorque 2 : réfrigérateur, plaque de cuisson, machine à café, glacière, etc.

Avantageusement, la remorque 2 comporte un ou plusieurs module(s) photovoltaïque(s) 11, de préférence monocristallins souples. Les modules photovoltaïques sont ménagés de préférence sur la partie supérieure de la remorque 2. La présence des modules photovoltaïques 11 a pour avantage de recharger la batterie 12 et ainsi de prolonger l'autonomie de celle-ci, et ce indépendamment du fait que la remorque 2 soit en mouvement ou à l'arrêt. D'autres moyens ou techniques connus permettant de prolonger l'autonomie de la batterie 12 peuvent également être prévus en complément ou en remplacement des modules photovoltaïques.

Avantageusement, le vélo 1 comporte une gâchette de frein électrique 9. Comme l'interface de commande, le frein électrique 9 est un organe déporté de la remorque 2. Il est fixé sur l'une des gâchettes de frein mécanique du vélo, de préférence la gâchette correspondant au frein de la roue arrière, et est arrangé de manière à être actionné avant le frein mécanique : lorsque l'utilisateur « appuie » sur le frein, la gâchette de frein électrique 9 est activée en premier, jusqu'à une mise en butée, ladite mise en butée correspondant à la puissance de freinage maximum des moteurs, pour être relayé automatiquement par le frein mécanique en cas de pression allant au-delà de la butée de la gâchette du frein électrique 9. Ce système permet ainsi au cycliste, en cas de freinage d'urgence, de renforcer naturellement, c'est-à-dire sans action supplémentaire de sa part, l'action du frein électrique 9 par le frein mécanique une fois la gâchette du frein électrique 9 en butée. Les moyens de freinage du vélo 1 sont ainsi fortement économisés et l'énergie de freinage récupérée de manière optimale grâce à la récupération de l'énergie cinétique du vélo. La gâchette de frein électrique 9 envoie également ses données à l'unité de commande via une connexion sans fil (radio ou Bluetooth) et tire son énergie pour mesurer et envoyer les données de la pression exercée par l'utilisateur lors du freinage, assurant ainsi une gâchette de frein électrique 9 totalement autonome.

Les figures 7 à 10 illustrent un autre exemple de réalisation d'une remorque selon l'invention.

La remorque 20 selon cet exemple reprend l'ensemble des caractéristiques précédemment décrites hormis l'arrangement des moyens de mesure mis en œuvre aux fins du pilotage différentié des roues de la remorque. Dans cet exemple, les moyens de mesure du dispositif de pilotage de la remorque comportent un capteur de déformation (6C) intégré au dispositif d'attelage et deux capteurs de position (non représentés) associés respectivement au moteur d'une des roues. Chaque capteur de position, du type capteur à effet Hall, permet ainsi de mesurer la vitesse du moteur de la roue auquel il est associé. La remorque comporte en outre un dispositif d'attelage arrangé pour permettre l'intégration du capteur de déformation.

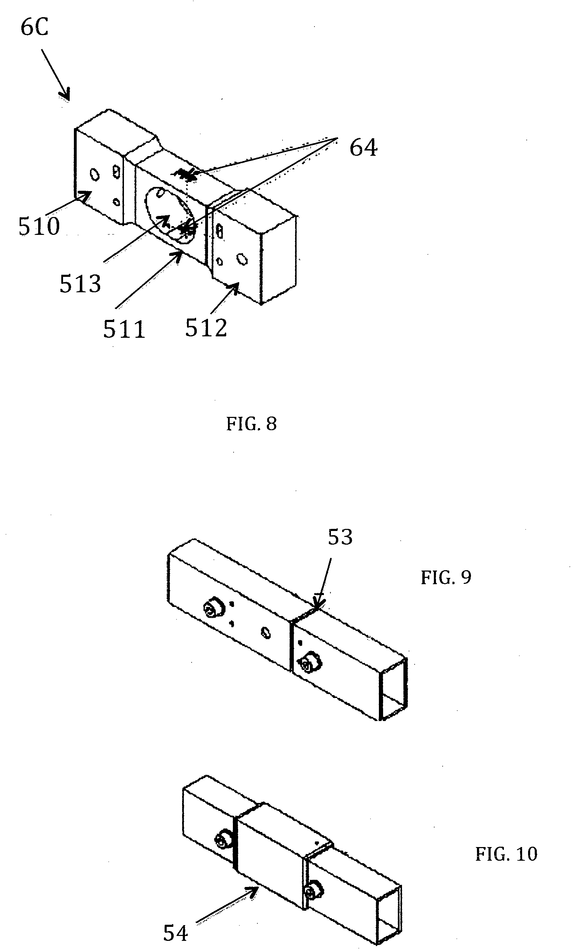

Plus particulièrement, le dispositif d'attelage 5 comprend, dans le mode de réalisation illustré, deux barres d'attelage 50, 52 tubulaires, l'une des barres 50 étant destinée à être fixée sur le vélo 1, l'autre barre 52 étant destinée à être fixée à la remorque 20. Lesdites barres 50, 52 sont reliées entre elles par une pièce de raccordement laquelle constitue le capteur de déformation 6C (figure 8).

Dans l'exemple illustré, la pièce de raccordement (ou capteur de déformation 6C) est formée d'une partie centrale 511 portant les jauges de déformations 64 et deux parties d'extrémité 510, 512 arrangées pour permettre la fixation de la pièce 51 à l'une des deux barres d'attelage 50, 52. La partie centrale 511 comporte un trou 513 traversant, dimensionné pour conférer à la pièce de raccordement un caractère déformable et ainsi permettre une mesure précise du signal représentatif de la déformation longitudinale de la pièce.

Dans l'exemple illustré, la partie centrale 511 comprend quatre jauges de déformation disposées par paire, chaque élément de la paire étant de part et d'autre du trou 513, l'une des paires étant orientée suivant l'axe du dispositif d'attelage (correspondant à l'axe du châssis), l'autre paire étant positionnée orthogonalement audit axe.

La pièce de raccordement est logée à l'intérieur des deux barres d'attelage 50, 52 de manière à s'étendre de part et d'autre de la zone de jonction 53 des deux barres d'attelage 50, 52, et est fixée à celles-ci comme illustré sur la figure 9 suivant des moyens de fixation et des techniques de fixation connus de l'homme du métier. Afin de protéger mécaniquement et thermiquement la zone de jonction entre les deux barres d'attelage, il peut être prévu d'équiper le dispositif d'attelage 5 d'un manchon de protection 54 placé autour de la zone de jonction 53 (figure 10).

L'invention est décrite dans ce qui précède à titre d'exemple. Il est entendu que l'homme du métier est à même de réaliser différentes variantes de réalisation de l'invention sans pour autant sortir du cadre de l'invention comme il est défini dans les revendications.

## Revendications

1. Remorque (2, 20) destinée à être attelée à un cycle, ladite remorque (2, 20) comprenant :
- un châssis (3) définissant un axe longitudinal AA et comprenant des roues (4A, 4B), chacune étant couplée à un moteur électrique (15),
- un dispositif d'attelage du châssis (3) au cycle et
- un dispositif de pilotage de la direction et de la vitesse ou du freinage de la remorque selon des instructions de commande données, le dispositif de pilotage comprenant :
- des moyens de mesure de signaux représentatifs d'efforts configurés pour mesurer au moins un signal représentatif de l'effort longitudinal et au moins un signal représentatif de l'effort transversal, lesquels efforts sont exercés par le cycle sur la remorque lorsque la remorque est attelée audit cycle, et
- une unité de commande (7) des moteurs apte à recevoir les informations relatives auxdits efforts longitudinaux et transversaux,
**caractérisée en ce que** les moyens de mesure comprennent des capteurs, parmi lesquels d'une part l'un des capteurs au moins est un capteur de déformation (6A, 6B, 6C) constituant les moyens de mesure du signal représentatif de l'effort longitudinal exercé par le cycle sur la remorque lorsque celle-ci est attelée audit cycle, et parmi lesquels d'autre part deux capteurs sont situés au niveau des roues constituant les moyens de mesure des signaux représentatifs de l'effort transversal exercé par le cycle sur la remorque lorsque celle-ci est attelée audit cycle.

2. Remorque (2, 20) selon la revendication 1, **caractérisée en ce que** les moyens de mesure comportent au moins deux capteurs de déformation (6A, 6B) fixés sur le châssis, symétriquement par rapport à l'axe longitudinal dudit châssis, chaque capteur de déformation (6A, 6B) étant situé à proximité et en amont d'une des roues (4A, 4B) associée.

3. Remorque (2, 20) selon la revendication 2, **caractérisée en ce que** le châssis (3) est formé de deux longerons (3A, 3B) sur chacun desquels une roue (4A, 4B) est fixée, chaque longeron (3A, 3B) comportant un capteur de déformation (6A, 6B) disposé à une distance de la roue associée inférieure à la moitié de la distance séparant le moyeu de la roue de l'extrémité du longeron la plus proche du dispositif d'attelage.

4. Remorque (2, 20) selon la revendication 1, **caractérisée en ce que** les moyens de mesure comportent un capteur de déformation (6C) intégré au dispositif d'attelage (5) et deux capteurs de position associés chacun au moteur d'une des roues (4A, 4B).

5. Remorque (2, 20) selon la revendication 4, **caractérisée en ce que** le dispositif d'attelage comprend deux barres d'attelage (50, 52) destinées à être fixées respectivement au vélo (1) et à la remorque (2, 20) et reliées entre elles par une pièce de raccordement (53) constituant le capteur de déformation (6C).

6. Remorque (2, 20) selon l'une quelconque des revendications 1 à 5, **caractérisée en ce que** l'unité de commande (7) comporte un algorithme d'asservissement du mouvement de la remorque au mouvement du cycle lorsque ladite remorque est attelée audit cycle, l'algorithme étant configuré pour piloter les moteurs (15) en fonction d'un mode de fonctionnement de la remorque sélectionné parmi des modes de fonctionnement implémentés dans ladite unité de commande (7), des signaux mesurés représentatifs des efforts longitudinaux et transversaux, lesdits modes de fonctionnement implémentés comprenant un mode dit d'« effacement » de la remorque dans lequel les moteurs (15) sont pilotés suivant une valeur du signal mesuré représentatif de l'effort longitudinal asservie à une valeur correspondant à un effort longitudinal nul, un mode dit de « poussée » de la remorque dans lequel les moteurs (15) sont pilotés suivant une valeur du signal mesuré représentatif de l'effort longitudinal mesuré asservie à une valeur correspondant à un effort longitudinal négatif et un mode dit « résistant » de la remorque dans lequel les moteurs (15) sont pilotés suivant une valeur du signal mesuré représentatif de l'effort longitudinal mesuré asservie à une valeur correspondant à un effort longitudinal positif.

7. Remorque (2, 20) selon la revendication précédente, **caractérisée en ce que** les modes de fonctionnement implémentés dans l'unité de commande (7) sont sélectionnés et actionnés par un dispositif de commande à distance (8).

8. Remorque (2, 20) selon l'une quelconque des revendications 1 à 7, **caractérisée en ce que** le dispositif de pilotage comporte en outre une gâchette de frein électrique apte à être fixée sur la gâchette d'un des freins mécaniques du cycle.

9. Remorque (2, 20) selon l'une quelconque des revendications 6 à 8, **caractérisée en ce qu'**elle comporte au moins une batterie rechargeable durant le fonctionnement en mode résistant de la remorque et/ou lors de l'actionnement de la gâchette de frein électrique.

10. Remorque (2, 20) selon l'une quelconque des revendications 1 à 9, **caractérisée en ce que** l'unité de commande (7) comporte un module de comparaison de la vitesse de la remorque (5) à une vitesse seuil intermédiaire et une vitesse seuil maximale enregistrées dans un module mémoire de l'unité de commande (7).

11. Remorque (2, 20) selon l'une quelconque des revendications 1 à 10, **caractérisée en ce que** le capteur de déformation (6A, 6B) comporte au moins deux jauges de déformation disposées à 90 degrés l'une de l'autre, l'une des jauges étant orientée suivant l'axe longitudinal AA du châssis (3).

12. Cycle attelé d'une remorque (2, 20) selon l'une quelconque des revendications 7 à 11, dont le dispositif de commande à distance (8), arrangé pour communiquer avec l'unité de commande (7) de la remorque (2, 20) et en particulier permettre la sélection d'un mode de fonctionnement parmi les modes de fonctionnement implémentés dans l'unité de commande (7), est fixé sur le guidon dudit cycle.

13. Cycle selon la revendication 12, **caractérisé en ce qu'**il comporte une gâchette (9) de frein électrique fixée sur la gâchette d'un des freins mécaniques dudit cycle (1).

## Patentansprüche

1. Anhänger (2, 20) zum Ankuppeln an ein Fahrrad, wobei der Anhänger (2, 20) Folgendes umfasst:
- ein Fahrgestell (3), das eine Längsachse AA festlegt und Räder (4A, 4B) umfasst, die jeweils an einen Elektromotor (15) gekoppelt sind,
- eine Vorrichtung zum Ankuppeln des Fahrgestells (3) an das Fahrrad und
- eine Vorrichtung zum Steuern der Richtung und Geschwindigkeit oder der Bremsung des Anhängers gemäß den gegebenen Steueranweisungen, wobei die Steuervorrichtung Folgendes umfasst:
- Mittel zum Messen von Kraftsignalen, die so konfiguriert sind, dass sie mindestens ein für die Längskraft repräsentatives Signal und mindestens ein für die Querkraft repräsentatives Signal messen, wobei diese Kräfte vom Fahrrad auf den Anhänger ausgeübt werden, wenn der Anhänger an das Fahrrad angekuppelt ist, und
- eine Steuereinheit (7) für die Motoren, die in der Lage ist, Informationen über die Längs- und Querkräfte zu empfangen,
**dadurch gekennzeichnet, dass** die Messmittel Sensoren umfassen, von denen einerseits mindestens ein Sensor ein Verformungssensor (6A, 6B, 6C) ist, der das Mittel zum Messen des Signals der vom Fahrrad auf den Anhänger ausgeübten Längskraft darstellt, wenn dieser an das Fahrrad angekuppelt ist, und von denen sich andererseits zwei Sensoren an den Rädern befinden und die Mittel zum Messen der Signale der vom Fahrrad auf den Anhänger ausgeübten Querkraft darstellen, wenn dieser an das Fahrrad angekuppelt ist.

2. Anhänger (2, 20) nach Anspruch 1, **dadurch gekennzeichnet, dass** die Messmittel mindestens zwei Verformungssensoren (6A, 6B) umfassen, die am Fahrgestell symmetrisch zur Längsachse des Fahrgestells befestigt sind, wobei sich jeder Verformungssensor (6A, 6B) in der Nähe eines der zugehörigen Räder (4A, 4B) im Bereich vor den Rädern befindet.

3. Anhänger (2, 20) nach Anspruch 2, **dadurch gekennzeichnet, dass** das Fahrgestell (3) aus zwei Längsträgern (3A, 3B) gebildet wird, an denen jeweils ein Rad (4A, 4B) befestigt ist, wobei jeder Längsträger (3A, 3B) einen Verformungssensor (6A, 6B) umfasst, der in einem Abstand vom zugehörigen Rad von weniger als der Hälfte des Abstands zwischen der Radnabe und dem Ende des Längsträgers angeordnet ist, das der Kupplungsvorrichtung am nächsten ist.

4. Anhänger (2, 20) nach Anspruch 1, **dadurch gekennzeichnet, dass** die Messmittel einen in die Kupplungsvorrichtung (5) integrierten Verformungssensor (6C) und zwei Positionssensoren umfassen, die jeweils dem Motor eines der Räder (4A, 4B) zugeordnet sind.

5. Anhänger (2, 20) nach Anspruch 4, **dadurch gekennzeichnet, dass** die Kupplungsvorrichtung zwei Zugstangen (50, 52) umfasst, die jeweils am Fahrrad (1) und am Anhänger (2, 20) befestigt werden und durch ein Verbindungsteil (53), das den Verformungssensor (6C) bildet, miteinander verbunden sind.

6. Anhänger (2, 20) nach einem der Ansprüche 1 bis 5, **dadurch gekennzeichnet, dass** die Steuereinheit (7) einen Algorithmus umfasst, der die Bewegung des Anhängers in Bezug auf die Bewegung des Fahrrads regelt, wenn der Anhänger an das Fahrrad gekuppelt ist, wobei der Algorithmus so konfiguriert ist, dass die Motoren (15) gemäß einer Betriebsart des Anhängers, die aus einer der in der Steuereinheit (7) implementierten Betriebsarten ausgewählt wird, und gemessener Signale, die Längs- und Querkräfte darstellen, gesteuert werden können, wobei die implementierten Betriebsarten eine Betriebsart genannt "Löschen" des Anhängers umfassen, in der die Motoren (15) gemäß einem die Längskraft darstellenden Messsignalwert gesteuert werden, der mit einem Wert geregelt wird, der einer Null-Längskraft entspricht, eine Betriebsart genannt "Schub" des Anhängers, in der die Motoren (15) gemäß einem, die gemessene Längskraft darstellenden Messsignalwert gesteuert werden, der mit einem Wert geregelt wird, der einer negativen Längskraft entspricht, und eine Betriebsart genannt "Widerstand" des Anhängers, in der die Motoren (15) gemäß einem die gemessene Längskraft darstellenden Messsignalwert gesteuert werden, der mit einem Wert geregelt wird, der einer positiven Längskraft entspricht.

7. Anhänger (2, 20) nach dem vorhergehenden Anspruch, **dadurch gekennzeichnet, dass** die in der Steuereinheit (7) implementierten Betriebsarten über ein Fernsteuergerät (8) ausgewählt und bedient werden.

8. Anhänger (2, 20) nach einem der Ansprüche 1 bis 7, **dadurch gekennzeichnet, dass** die Steuervorrichtung des Weiteren einen elektrischen Bremshebel umfasst, der auf dem Hebel einer der mechanischen Bremsen des Fahrrads befestigt werden kann.

9. Anhänger (2, 20) nach einem der Ansprüche 6 bis 8, **dadurch gekennzeichnet, dass** er mindestens einen Akku umfasst, der während des Betriebs des Anhängers in der Widerstandsbetriebsart des Anhängers und/oder bei Betätigung des elektrischen Bremshebels wiederaufladbar ist.

10. Anhänger (2, 20) nach einem der Ansprüche 1 bis 9, **dadurch gekennzeichnet, dass** die Steuereinheit (7) ein Modul zum Vergleichen der Geschwindigkeit des Anhängers (5) mit einer mittleren Schwellengeschwindigkeit und einer maximalen Schwellengeschwindigkeit umfasst, die in einem Speichermodul der Steuereinheit (7) gespeichert sind.

11. Anhänger (2, 20) nach einem der Ansprüche 1 bis 10, **dadurch gekennzeichnet, dass** der Verformungssensor (6A, 6B) mindestens zwei Verformungsmessstreifen umfasst, die um 90 Grad zueinander angeordnet sind, wobei einer der Messstreifen in der Längsachse AA des Fahrgestells (3) ausgerichtet ist.

12. Fahrrad, an welches ein Anhänger (2, 20) nach einem der Ansprüche 7 bis 11 angekuppelt ist, dessen Fernsteuergerät (8), das so ausgelegt ist, dass es mit der Steuereinheit (7) des Anhängers (2, 20) kommunizieren kann und insbesondere die Auswahl einer Betriebsart aus den in der Steuereinheit (7) implementierten Betriebsarten ermöglicht, am Lenker des Fahrrads befestigt ist.

13. Fahrrad nach Anspruch 12, **dadurch gekennzeichnet, dass** es einen elektrischen Bremshebel (9) umfasst, der am Hebel einer der mechanischen Bremsen des Fahrrads (1) befestigt ist.

## Claims

1. A trailer (2, 20) intended to be attached to a cycle, said trailer (2, 20) comprising :
- a chassis (3) defining a longitudinal axis AA and comprising wheels (4A, 4B), each coupled to an electric motor (15),
- a device for attaching the chassis (3) to the cycle and
- a device for controlling the direction and speed or braking of the trailer according to given control instructions, the control device comprising:
- means for measuring signals representative of forces configured to measure at least one signal representative of the longitudinal force and at least one signal representative of the transverse force, which forces are exerted by the cycle on the trailer when the trailer is attached to said cycle, and
- a motor control unit (7) capable of receiving the information relating to said longitudinal and transverse forces,
**characterized in that** the measuring means comprise sensors, among which, on the one hand, at least one of the sensors is a deformation sensor (6A, 6B, 6C) constituting the means for measuring the signal representative of the longitudinal force exerted by the cycle on the trailer when it is attached to said cycle, and among which two sensors are located at the wheels constituting the means for measuring the signals representative of the transverse force exerted by the cycle on the trailer when it is attached to said cycle.

2. A trailer (2, 20) according to claim 1, **characterized in that** the measuring means comprise at least two deformation sensors (6A, 6B) fixed to the chassis, symmetrically with respect to the longitudinal axis of said chassis, each deformation sensor (6A, 6B) being located near and upstream of one of the associated wheels (4A, 4B).

3. A trailer (2, 20) according to claim 2, **characterized in that** the chassis (3) is formed of two longitudinal members (3A, 3B) to each of which a wheel (4A, 4B) is fixed, each longitudinal member (3A, 3B) having a deformation sensor (6A, 6B) arranged at a distance from the associated wheel of less than half the distance between the hub of the wheel and the end of the longitudinal member closest to the attaching device.

4. A trailer (2, 20) according to claim 1, **characterized in that** the measuring means comprise a deformation sensor (6C) integrated in the attaching device (5) and two position sensors each associated with the motor of one of the wheels (4A, 4B).

5. A trailer (2, 20) according to claim 4, **characterized in that** the attaching device comprises two drawbars (50, 52) intended to be fixed respectively to the bicycle (1) and to the trailer (2, 20) and connected to each other by a connecting part (53) constituting the deformation sensor (6C).

6. A trailer (2, 20) according to any one of claims 1 to 5, **characterized in that** the control unit (7) includes an algorithm for having the movement of the trailer controlled by the movement of the cycle when said trailer is attached to said cycle, the algorithm being configured to control the motors (15) according to an operating mode of the trailer selected from operating modes implemented in said control unit (7), measured signals representative of the longitudinal and transverse forces, said implemented operating modes comprising a so-called "erasing" mode of the trailer in which the motors (15) are driven according to a value of the measured signal representative of the longitudinal force controlled by a value corresponding to a zero longitudinal force, a so-called "thrust" mode of the trailer in which the motors (15) are driven according to a value of the measured signal representative of the measured longitudinal force controlled by a value corresponding to a negative longitudinal force and a so-called "resistant" mode of the trailer in which the motors (15) are driven according to a value of the measured signal representative of the measured longitudinal force controlled by a value corresponding to a positive longitudinal force.

7. A trailer (2, 20) according to the preceding claim, **characterized in that** the operating modes implemented in the control unit (7) are selected and operated by a remote control device (8).

8. A trailer (2, 20) according to any one of claims 1 to 7, **characterized in that** the control device further comprises an electric brake trigger capable of being fixed to the trigger of one of the mechanical brakes of the cycle.

9. A trailer (2, 20) according to any one of claims 6 to 8, **characterized in that** it comprises at least one battery rechargeable during the operation of the trailer in resistant mode and/or when the electric brake trigger is activated.

10. A trailer (2, 20) according to any one of claims 1 to 9, **characterized in that** the control unit (7) has a module for comparing the speed of the trailer (5) to an intermediate threshold speed and a maximum threshold speed stored in a memory module of the control unit (7).

11. A trailer (2, 20) according to any one of claims 1 to 10, **characterized in that** the deformation sensor (6A, 6B) comprises at least two strain gauges arranged at 90 degrees to each other, one of the gauges being oriented along the longitudinal axis AA of the chassis (3).

12. A cycle attached to a trailer (2, 20) according to any one of claims 7 to 11, the remote control device (8) of which, arranged to communicate with the control unit (7) of the trailer (2, 20) and in particular to allow the selection of an operating mode among the operating modes implemented in the control unit (7), is fixed to the handlebar of said cycle.

13. A cycle according to claim 12, **characterized in that** it comprises an electric brake trigger (9) fixed to the trigger of one of the mechanical brakes of said cycle (1).
